# EUROPEAN PATENT APPLICATION

(11) **EP 2 824 960 A1**
(43) Date of publication of application: **14.01.2015**
(21) Application number: 14176248.4
(22) Date of filing: 09.07.2014
(51) Int. Cl.: H04W 24/08, H04W 64/00

(54) **Errors in cell locations in a wireless network**

(30) Priority: 09.07.2013 GB 201312332
(71) Applicant: Vodafone IP Licensing Limited, The Connection Newbury Berkshire RG14 2FN (GB)
(72) Inventor: Scarr, Kevin, London, W2 6BY (GB); Davies, Roy, London, W2 6BY (GB)
(74) Representative: Boult Wade Tennant

(57) **Abstract**

Method and system for testing base station location information comprising identifying a second base station neighbouring a first base station. Obtaining information describing the locations of the first base station and the second base station. Determining if the location of the first base station and the location of the second base station are further apart than a predetermined threshold, wherein if the location of the first base station and the location of the second base station are further apart than a predetermined threshold then indicating a first error.

Method and system for testing base station location information comprising obtaining mobile call data. Determining a handoff event from a first base station to a second base station from the mobile call data. Obtaining information describing the locations of the first and second base stations. If the described locations of the first base station and the second base station are further apart than a predetermined threshold then indicating a first error.

## Description

### Field of the Invention

The present invention relates to a method for testing base station location information and in particular for identifying and correcting errors in such information.

### Background of the Invention

A database is maintained for all base stations or cell sites within a mobile network. These base stations may comprise fixed base stations including cell towers, mobile or temporary base stations and femtocells that may be used and maintained by individuals to provide small scale local cellular coverage. This database of base stations may include base station data including the geographical location of the base station, the centre of coverage of that base station (centroid) the geographic coverage of each base station (centroid plus radius of coverage) and a list of neighbouring or bordering base stations for each individual base station.

This information may be obtained from a number of sources. The information may also be entered manually. For femtocells, the location information may be calculated from the postcode of the customer who purchased the device. Locations of fixed base stations may be captured or acquired from the postcode of the location where they were originally installed. Some base stations may also have GPS receivers to provide location information.

The varied nature of the information within the database can result in errors or omissions, especially relating to the base station locations. For example, a customer of femtocell may not necessarily install their device at their home location, but may use it elsewhere. Postcodes may change or be updated. Therefore, an original postcode associated with a particular base station may no longer be associated with the physical location or may no longer exist. Updating such information may require manual intervention. Furthermore, it may not be easy or straightforward to identify errors in such information. Even where base station location information is correct (e.g. from GPS receivers), it may take hours or days for this information to be received and stored especially for new or recently moved base stations.

Whilst errors in location information within the database associated with each base station may not prevent the handling of calls, SMS or data transmission for mobile devices, other functionality may be affected. For example, base station location information may be utilised by emergency services to find the approximate location where a call or SMS was executed. This can be difficult or impossible when the base station location information is incorrect or missing for the particular base station that handled the call or SMS. Other services may be provided to users of mobile devices that use base station location information. For example, his may include offering users specific services based on their location or presence.

US2012/0270561 describes base stations that identify their neighbouring base stations and obtain from them transmitted signals. The base station determines the signal strength of the received signals and uses this information to calculate or estimate the locations of its neighbouring base stations.

US8,219,116 describes a system for estimating the location of a wireless base station using a collection of data samples obtained from a mobile device. These data samples may contain carrier related timing information.

Therefore, there is required a method and system that allows errors in the base station database to be detected and corrected more effectively.

### Summary of the Invention

Against this background and in accordance with a first aspect there is provided a method of testing base station location information, the method comprising the steps of:
identifying a second base station neighbouring a first base station;
obtaining information describing the locations of the first base station and the second base station; and
determining if the location of the first base station and the location of the second base station are further apart than a predetermined threshold, wherein
   if the location of the first base station and the location of the second base station are further apart than a predetermined threshold then indicating a first error. Therefore, errors may be detected in the stored location information. The threshold may be adjusted as necessary. For example, the threshold may be reduced to identify more errors (i.e. include smaller errors) or increased to identify only the greatest errors in location information.

Base stations may also be known as mobile cell sites, cellular base stations and radio base stations, for example. The ability to test for and identify incorrect base station location information can be useful. For example, base stations with identified incorrect location information may be excluded or ignored or otherwise compensated for when carrying out tasks or providing functionality that uses location information. Each base station may have stored related information that lists its neighbouring base stations (ncell information). There may be one or more neighbours or ncells, for example. The method operates by considering one neighbour of a base station (i.e. a neighbouring pair of base stations). However, the method may also consider a second and further base stations listed as being the neighbour of the first base station (i.e. the method works if there is only one ncell but can be extended to include more than one listed ncell). Preferably, all of the ncells or listed neighbouring cells will be included in the test.

Preferably, the method may further comprise the steps of:
identifying a third base station neighbouring the first base station;
obtaining information describing the location of the third base station;
determining if the location of the first base station and the location of the third base station are further apart than a predetermined threshold, wherein
   if the location of the first base station and the location of the third base station are further apart than a predetermined threshold then indicating a second error.

Advantageously, if the first and the second errors are indicated then determining that the information describing the location of the first base station is incorrect, and further wherein
if the first error is indicated and the second error is not indicated then determining that the information describing the location of the second base station is incorrect, and further wherein
if the first error is not indicated and the second error is indicated then determining that the information describing the location of the third base station is incorrect. Looking at two base stations that are recorded as neighbours and then finding that they are further apart than they should be is useful in identifying an error but from this test it is not necessarily possible to determine what information is incorrect (i.e. either or both base station location information). Testing a third, fourth, fifth or more base stations that are recorded as being neighbours allows the erroneous data to be identified.

Optionally, the method may further comprise the step of estimating corrected information describing the location of any of the first, second or third base stations that are determined to be incorrect.

Preferably, the corrected information may be based on the information describing the location of any of the first, second and/or third base stations that are determined to be correct. With a minimum of three base stations being investigated or tested if the location information of one of these is determined to be incorrect or outside of a threshold then the location information of the remaining two (or more) base stations may be used to estimate corrected location information. The estimated corrected location information may be used to update a database containing location information, or used in other ways.

Optionally, the method may further comprise performing a reverse Voronoi/Theisen polygon implementation to determing the corrected information.

Optionally, the rad-90 coverage of the first base station may be within the rad-90 coverage of the second base station. The rad-90 coverage of a base station is the distance (radius) from the centroid (centre of radio coverage) that 90% of mobile units within that area or radius be allocated or use that particular base station rather than a neighbouring base station.

In accordance with a second aspect there is provided a method of testing base station location information, the method comprising the steps of:
obtaining network event data;
determining from the network event data a mobile unit interacting with a first base station and then the mobile unit interacting with a second base;
obtaining information describing the locations of the first and second base stations; and
   if the described locations of the first base station and the second base station are further apart than a predetermined distance or threshold then indicating a first error. The network event data may be received in real-time, near real-time or be stored call data. This method may be used instead of or as well as the method of the first aspect. In other words, the method of the first aspect may be used to find errors and the method of the second aspect may be used to confirm or check those errors. The network event data may also be performance data. The mobile unit may interact with one base station and then interact with a second base station for various reasons and during or between various network events. These events may include calls, packet data protocol (PDP) context creation, network paging event or SMS, for example. Transfers or Handoffs may occur even when the mobile unit is stationary. In one example, the network event data is mobile call data. The transfer or interactions do not need to take place during one event but may involve more than one event. The threshold may be in absolute distance or may be in distance per unit time (e.g. velocity). For example, the mobile unit may be known to interact with one base station at a first time and then interact (transfer to) with a second base station at a second time. The stored locations between base stations may be retrieved. Therefore, the apparent velocity of the mobile unit may be determined and compared against a threshold.

Preferably, the method may further comprise the step of searching the network event data for one or more particular base stations being the first base station or the second base station. In other words rather than check any or all event or call data, handoffs or transfers involving particular base stations of interest may be search for or investigated (e.g. where errors found by other means including those of the first aspect, are suspected or identified).

Optionally, the step of determining the mobile unit interacting with the first base station and then interacting with the second base station further comprises detecting a call handoff or handover event.

Optionally, the obtained network event or mobile call data may be restricted to network event data within a most recent time period and/or having shortest call duration. In other words, only a certain number or predetermined number (e.g. 50) of the most recent events or calls or the shortest call duration may be used or investigated. This ensures the results remain more up to date. This may be calls in general or only those involving handoff events, for example. Using the shortest duration calls may restrict the range for narrowing down the estimated location. This may ensure that the results are more up to date, which may improve the margin of error.

Optionally, the most recent time period may be 24 hours.

Preferably, the method may further comprise the steps of:
determining a second mobile unit interacting with the second base station and then the second mobile unit interacting with a third base station;
obtaining information describing the location of the third base station;
determining if the described locations of the second base station and the third base station are further apart than a predetermined distance or threshold; and
   if the described locations of the second base station and the third base station are further apart than a predetermined distance or threshold then indicating a second error.

Optionally, if the first and the second errors are indicated then determining that the information describing the location of the second base station is incorrect, and further wherein
if the first error is indicated and the second error is not indicated then determining that the information describing the location of the first base station is incorrect, and further wherein
if the first error is not indicated and the second error is indicated then determining that the information describing the location of the third base station is incorrect. This identifies the particular base station have erroneous location information.

Preferably, the method may further comprise the step of estimating corrected information describing the location of the second base station when it is determined to be incorrect. The estimated corrected location of the second base station may be used to update the database containing location information or used in other ways.

Optionally, the corrected location information may be estimated iteratively until the corrected location information of the second base station provides an area of cellular coverage (e.g. rad-90) that borders or overlaps the cellular coverage of the first base station and the second base station. One (i.e. a single estimation) or more iterations may be necessary until such a condition is met. Set theory may be used for this purpose.

Preferably, the locations of the base stations may be the geographic centroids of the base station cellular coverage.

Optionally, the mobile unit and the second mobile unit are the same device. In other words, transfers or different events from different devices may form a single set. Alternatively, a plurality of handoff events, transfers between base stations or events involving interactions with base stations from a single device moving (or at least handing off) between several different base stations may be considered.

In accordance with a third aspect there is provided a system for testing base station location information, the system comprising logic configured to:
identify a second base station neighbouring a first base station;
obtain information describing the locations of the first base station and the second base station; and
determine if the location of the first base station and the location of the second base station are further apart than a predetermined threshold or distance, wherein
   if the location of the first base station and the location of the second base station are further apart than a predetermined threshold or distance then indicating a first error.

In accordance with a fourth aspect there is provided a system for testing base station location information, the system comprising logic configured to:
obtain mobile call or network event data;
determine from the network event data a mobile unit interacting with a first base station and then the mobile unit interacting with a second base station;
obtain information describing the locations of the first and second base stations; and
   if the described locations of the first base station and the second base station are further apart than a predetermined distance or threshold then indicating a first error.

The first and third aspects (first technique) may provide quicker or more efficient identification of errors but these rely on less reliable data. The second and fourth aspects (second technique) may take longer (as there may be more data to process) and may be more computational intensive to operate but the results may be more accurate. Therefore, the two techniques may be combined, perhaps with the second technique used to confirm the results of the first technique, for example.

The methods described above may be implemented as a computer program comprising program instructions to operate a computer. The computer program may be stored on a computer-readable medium.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a mobile network of base stations indicating erroneous stored location information;
FIG. 2 shows a flow diagram of a method for testing base station location information;
FIG. 3 shows a schematic diagram of mobile network base stations indicating on nearest neighbour information;
FIG. 4 shows a schematic diagram of physical or geographical locations of the base stations of figure 3 based on stored information about the base stations;
FIGs. 5a-5d show a series of schematic diagrams illustrating an example method for correcting erroneous base station location information;
FIG. 6 shows a schematic diagram of two of the base stations of fig. 3 illustrating a handoff event between two base stations;
FIG. 7 shows a flow diagram of a further method for testing base station location information using the handoff event of figure 6; and
FIG. 8 shows a schematic diagram of a method for calculating or estimated a location of a base station with erroneous stored location information.

It should be noted that the figures are illustrated for simplicity and are not necessarily drawn to scale.

### Detailed description of the preferred embodiments

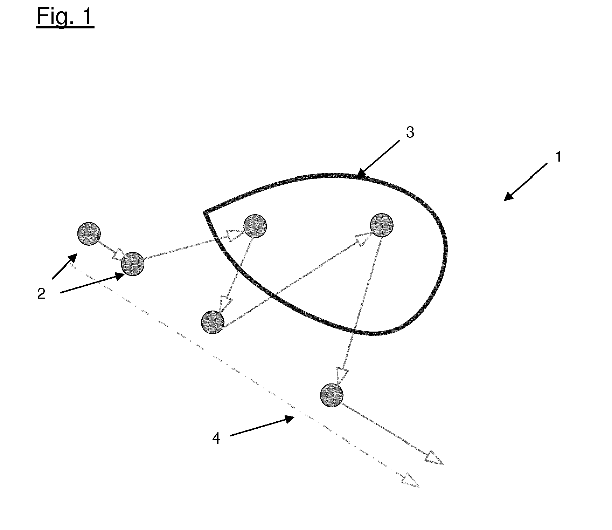

Figure 1 shows a schematic diagram of a mobile network 1 indicating the locations of mobile base stations 2 as recorded by their stored base station location information. In other words, figure 1 illustrates correct as well as erroneous location information for the mobile base stations 2. In this example illustration, base stations with erroneous information are shown within boundary 3. Therefore, a moving mobile unit travelling along direction of travel 4 (a straight line) will appear to move erratically or in a "zig-zag" fashion when plotted against the stored location information of the mobile base stations that it utilises. Therefore, the location information for the two mobile base stations within boundary 3 should also lie on a straight line if and when corrected.

Alternatively, if the base station information is used to track or record the movement of the mobile base station then ideally, the base stations within boundary 3 should be ignored or disregarded. The following described methods and systems provide tests for determining or identifying base stations with incorrect stored base station information.

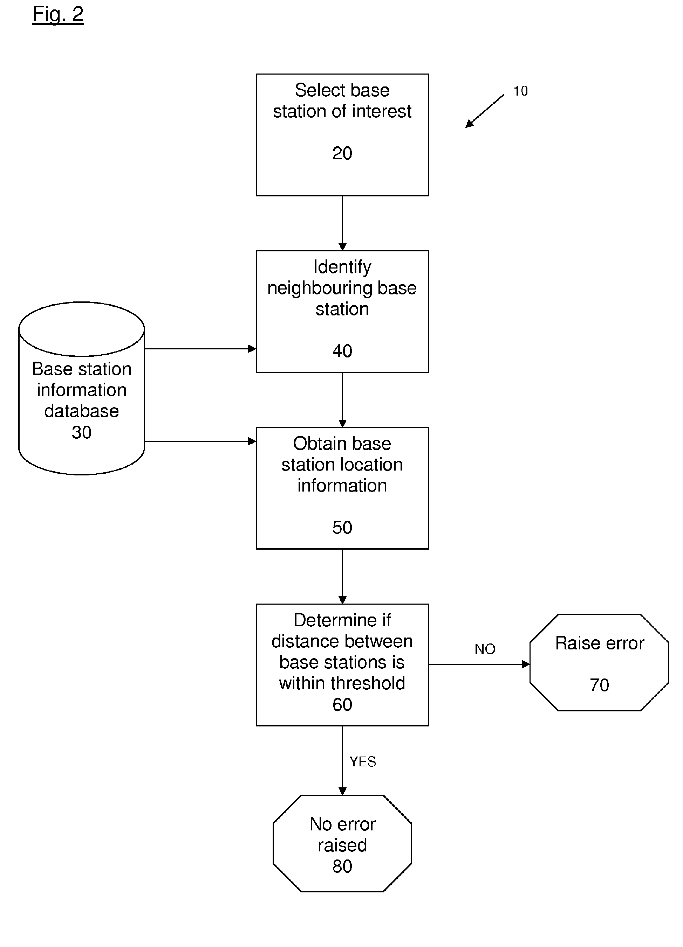

Figure 2 shows a flow diagram of a method 10 for detecting errors in base station location information as illustrated in figure 1. At step 20, a particular base station of interest (e.g. a base station that may be determined as requiring further investigation, a base station from an area of interest or a random base station) is selected. Information identifying a neighbouring base station to this base station of interest is also stored or associated with the base station of interest. This information may be recorded as nearest cell or ncell data. A neighbouring base station to the base station of interest is identified at step 40. A base station information database 30 stores the ncell data and also contains graphical location information for each base station in a network. This is obtained for both the base station of interest and its neighbouring base station at step 50. At step 60 a determination is made as to whether the distance between the neighbouring base stations (i.e. from the stored location information) is within a predetermined threshold or distance. This threshold may be determined based on average geographical distance between neighbouring base stations or the maximum distance between neighbouring base stations that is achievable without losing mobile coverage in between.

If the distance between the retrieved base station locations is not within the threshold then an error is raised at step 70. If the distance is within the threshold, then no error is raised at step 80. The errors and/or passes may be recorded either within the database 30 or external to this database. The method may be repeated for further base stations of interest and their neighbouring base stations. The method may also be repeated for different neighbouring base stations for the same base station of interest.

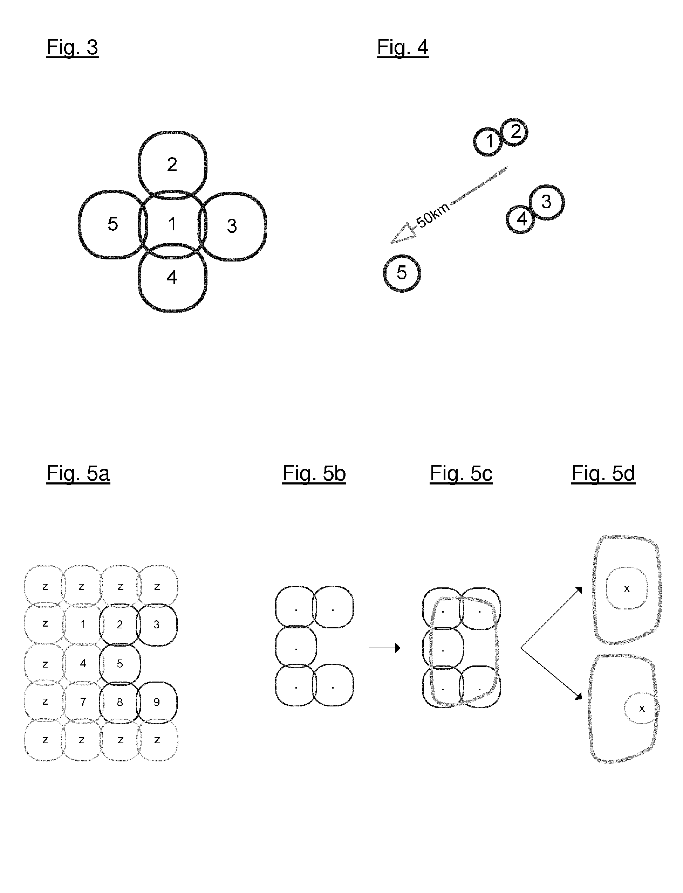

Figure 3 illustrates schematically the ncell information as stored in base station information database 30. Base stations 1, 2, 3, 4 and 5 are shown as being neighbouring base stations but this is an example only and any number of neighbouring base stations may be used in the described methods. As illustrated in figure 3, each of base stations 2, 3, 4 and 5 are neighbours to base station 1. In other words, the cellular coverage for each of base stations 2 to 5 should border or overlap with that of base station 1.

Figure 4 shows a schematic diagram of the stored location information for the same 5 base stations as stored in database 30. As can be seen in this example, the information relating to base station 5 is erroneous it is recorded as being located 50 kilometres from its neighbour (base station 1). Several possible errors may exist in the stored data. For example, the locations of base station 1 or 5 may incorrect or the ncell information for base station 1 is erroneous (i.e. base station 5 is not its physical neighbour).

Therefore, the method 10 shown in figure 2 will identify the occurrence of an error, which may be investigated further. Once identified, the location information or ncell data may be corrected, with the database being updated with the correct location or ncell data. In this example, it can be seen that the location of base station 5 is incorrect, whereas the locations of base stations 1, 2, 3 an 4 are likely to be correct. Where two or more neighbours are considered then set theory may be used to estimate a corrected location. In the example shown in figures 3 and 4 the coverage footprints of cell 1 and its ncells 2 to 5 may be considered to attempt to identify where the erroneous cell 5 should be located or have an expected coverage.

A reverse Voronoi/Theisen polygon implementation may be used to reduce a possible nearest cell coverage area into its constituent cells, for example.

Figures 5a-5d illustrate in more detail a method for inferring or estimating corrected locations of a cell identified as being incorrect using configuration (ncell & location of its nearest cells) data.

Figure 5a illustrates the coverage of base stations (cells) within an example network. One base station is not shown in this figure as its location information has been determined to incorrect. However, this particular base station will have a stored list of its neighbours (ncells). The ncells for the base stations with incorrect information are 2, 3, 5, 8 and 9 in Figure 5a.

Figure 5b shows only these neighbouring cells (ncells). The centroid locations (centre of radio coverage) for these ncells are retrieved as a first step. This information may be in the form of latitude and longitude, for example. The centroids are illustrated as dots in figure 5b.

Figure 5c illustrates the next step in which a geographic area (e.g. a lasso around the centroids) is formed that covers all of the centroid points retrieved in the first step. The "lasso" denotes a created area that covers all the centroids using these points as boundaries.

The third step is to derive the centroid of the geographic area created in the second step, as shown at the top portion of figure 5d. As a first estimation of postion (x), this location may be an inferred centroid for the base station or cell with the determined erroneous location values. The cell may also have an estimated are of coverage.

However, this estimation may be improved further as illustrated in the bottom portion of figure 5d. The described correction algorithm may add a gravitational weighting to the centroid of each ncell identified in the first step. For each ncell retrieved, the number of neighbouring cells recorded for that cell are retrieved and this number becomes it's 'weighting'. Weightings are used such that the lower the number of ncells or neighbours then the greater the pull. So in affect those cells with many ncells (the centroid of the cell with erroneous location information is not included), have a lesser gravitational pull on the overall calculation to determine the centroid of the total geographic area. This may be important when dealing with locations along coastlines, when a cell may not be surrounded on all sides.

Each ncell of the erroneous cell will have its own ncell list. Both results (with and without gravitational pull) are shown in figure 5d. The algorithm may utilise the rad-90 estimated coverage areas and create a lasso area around these coverage areas before then calculating the new centroid point for the cell (shown as x on the lower portion of figure 5d). This new centroid location may be stored for this cell or otherwise used when the cell is considered for other data interpretation purposes. In other words, the calculated, corrected location for the base station can be stored in the database.

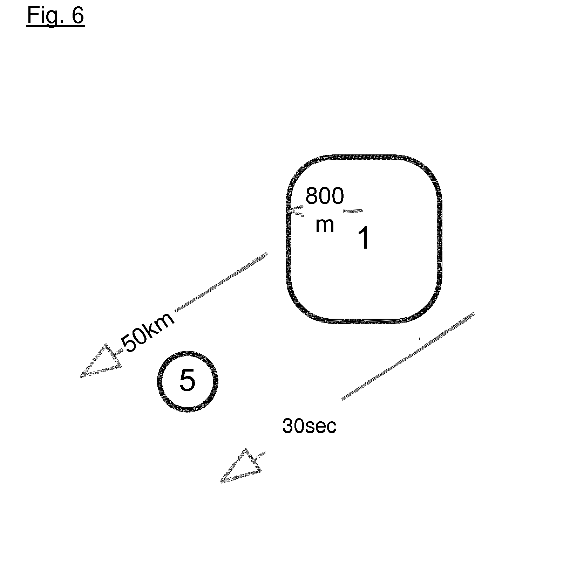

Other data may be used to identify errors in stored base station information database 30. Figure 6 illustrates schematically a handoff between event occurring for a mobile handset that starts with source base station 1 having an 800 metre mobile coverage to a target base station 5 occurring 30 seconds into a call. However, the location information for base station 5 is recorded as being 50 kilometres from the location of base station 1. This handoff event may be recorded with the call data. Therefore, this information provides an indication that the stored location for either cell 1 or cell 5 is incorrect as the mobile device could not have travelled 50 kilometres in 30 seconds.

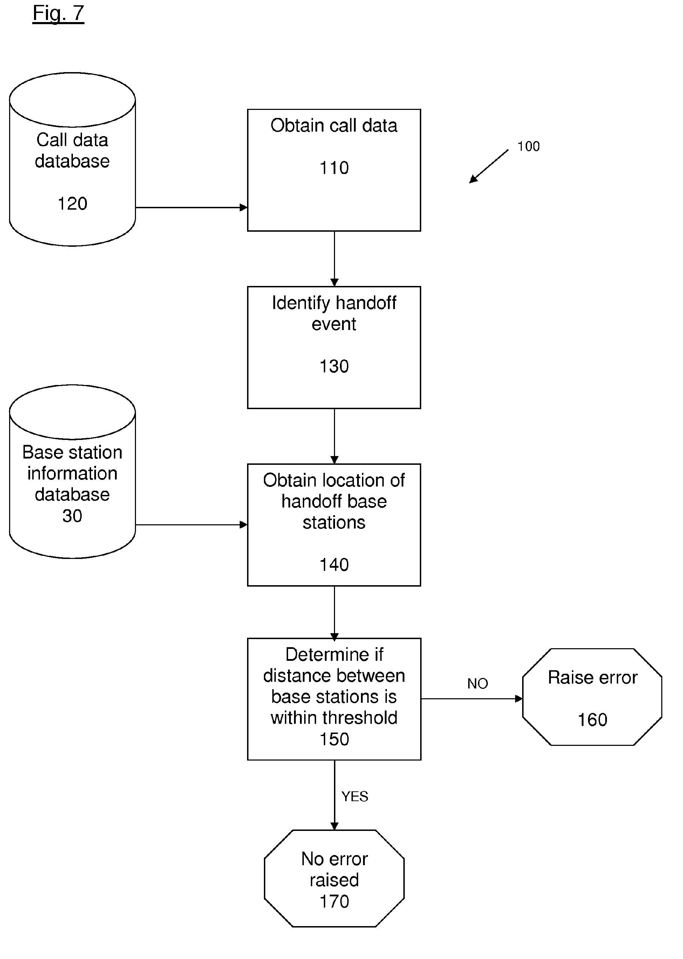

Figure 7 illustrates a flow diagram of a further method 100 that uses such information to identify this type of error. Method 100 may be used where ncell information is unavailable or to confirm errors identified by method 10 using different data. Handoff event data has an advantage being real event data rather than relying on manually stored information (i.e. ncell data or base station location information).

At step 110 call data is obtained from a call data database 120. Alternatively, the call data may be obtained from a real-time or near real time stream. A handoff event within the call data is identified at step 130. The base station information database 30 is queried to obtain location information of the base stations involved in the handoff event (i.e. base stations 1 and 5 of figure 5 at step 140).

A similar step to that of method 10 is carried out in which it is determined whether the distance between the base stations (105) is within a particular threshold or predetermined distance at step 150. If this distance is not within the threshold then an error is raised at step 160. If the distance is within the threshold then no error is raised at step 170. The method 100 may be repeated for different handoff events or for handoff events involving at least one of the base stations (1 or 5). For example, if a further handoff event between base stations 1 and a different base station 2 is detected in the call data database 120 then the method 100 may be repeated for that combination of two base stations. If an error was raised at step 160 when considering base stations 1 and 5 and then no error is raised when considering base stations 1 and 2 then it may be inferred that the location information for database 5 is incorrect (and the location information for base stations 1 and 2 are correct) and may require correction, further investigation or exclusion as necessary. The handoff events may take place within the same call or for different calls with different handsets or mobile units. The method may operate in batch mode. For example, the stored location information may be tested to identify cells that have extreme distances (or at least outside of a predetermined value) from their nearest cells (ncells). Therefore, a batch mode may be used as an optimisation step to identify erroneous cells.

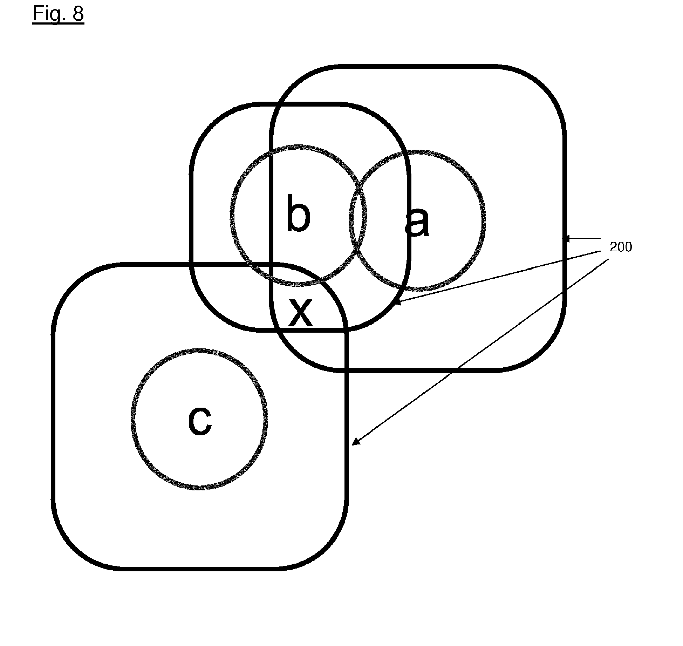

Figure 8 illustrates schematically how erroneous location information may be corrected. In the example shown in figure 8, three base stations a, b and c are shown. The location information for base station x has already been determined as being erroneous according to method 100.

Plotting a cell centroid along with possible distance travelled by a mobile device handing off (or transferring) between the cells (e.g. x to a, x to b, and x to c) provides a circle containing a theoretical maximum moved distance (e.g. for a mobile unit travelling up to 70mph) for the base station. Set theory may then be applied to derive a most likely position that covers the majority of the cell circles covered by area (relative to cell size). In the example shown in figure 8, areas of coverage are denoted by the circles (e.g. rad-90 distance from the cell coverage centroids). The possible or probably distance travelled by a mobile unit within a particular time frame is denoted by borders 200 around each base station centroid a, b and c. The position of border overlap is illustrated at "x", which indicates a possible or probably actual location for base station x. Therefore, the base station location information may be corrected in this way. Other techniques may be used to determine or estimate corrected base station locations. These corrected locations may be used to update database 30 or used in other ways.

The base stations may for part of a mobile network. There are a number of different digital cellular technologies that may be used, including: Global System for Mobile Communications (GSM), General Packet Radio Service (GPRS), cdmaOne, CDMA2000, Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/TDMA), and Integrated Digital Enhanced Network (iDEN).

The methods 10, 100 may be implemented using a suitable computer system having an operating system including Windows (RTM), UNIX, OSX (RTM) and Linux, for example. The databases 30, 120 may run a suitable relational or non-relational database management system such as Oracle, Microsoft SQLServer (RTM), IBM DB2, or a NoSql store like MongoDB, for example. The computer system may be stand-alone or networked together with the databases.

As will be appreciated by the skilled person, details of the above embodiment may be varied without departing from the scope of the present invention, as defined by the appended claims.

For example, the handover or handoff events may be any network event (or group of events) in which a mobile unit uses one base station and then moves or transfers to another bases. As the network event data typically includes timestamp information then it may be inferred from these timestamps that the location information of at least one base stations is incorrect if the mobile unit had to travel above a threshold speed or velocity in order to interact with another base station in the time between timestamps. The transfer does not have to occur during a particular event but may involve a series of events. For example, a first call, data transfer or SMS from a mobile unit be made and then ends using one base station. A second call, data transfer or SMS from the same mobile unit using a different base station may occur. The difference between the timestamp at the end of the first event and the timestamp at the start of the second event may be compared against the stored location information of the two base stations. If above a particular distance (or distance per unit time) then the location information of one base station may be determined to be incorrect.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of testing base station location information, the method comprising the steps of:
obtaining from a database a record of a second base station recorded as neighbouring a first base station;
obtaining from the database information describing the locations of the first base station and the second base station; and
determining if the described location of the first base station and the described location of the second base station are further apart than a predetermined threshold, wherein
if the described location of the first base station and the described location of the second base station are further apart than a predetermined threshold then indicating a first error.

2. The method of claim 1 further comprising the steps of:
obtaining from a database a record of a third base station recorded as neighbouring the first base station;
obtaining from the database information describing the location of the third base station;
determining if the described location of the first base station and the described location of the third base station are further apart than a predetermined threshold, wherein
if the described location of the first base station and the described location of the third base station are further apart than a predetermined threshold then indicating a second error.

3. The method of claim 2, wherein
if the first and the second errors are indicated then determining that the information describing the location of the first base station is incorrect, and further wherein
if the first error is indicated and the second error is not indicated then determining that the information describing the location of the second base station is incorrect, and further wherein
if the first error is not indicated and the second error is indicated then determining that the information describing the location of the third base station is incorrect.

4. The method of claim 3 further comprising the step of estimating corrected information describing the location of any of the first, second or third base stations that are determined to be incorrect.

5. The method of claim 4, wherein the corrected information is based on the information describing the location of any of the first, second and/or third base stations that are determined to be correct.

6. The method of claim 5 further comprising performing a reverse Voronoi/Theisen polygon implementation to determing the corrected information.

7. The method according to any previous claim, wherein the rad-90 coverage of the first base station is within the rad-90 coverage of the second base station.

8. A method of testing base station location information, the method comprising the steps of:
obtaining network event data;
determining from the network event data a mobile unit interacting with a first base station and then the mobile unit interacting with a second base station;
obtaining from a database information describing the locations of the first and second base stations; and
if the described locations of the first base station and the second base station are further apart than a predetermined threshold then indicating a first error.

9. The method of claim 8, where the obtained network event data is restricted to call data within a most recent time period and/or having shortest call durations.

10. The method of claim 9, wherein the most recent time period is 24 hours.

11. The method according to any of claims 8 to 10 further comprising the steps of:
determining a second mobile unit interacting with the second base station and then the second mobile unit interacting with a third base station;
obtaining from the database information describing the location of the third base station;
determining if the described locations of the second base station and the third base station are further apart than a predetermined distance; and
if the described locations of the second base station and the third base station are further apart than the predetermined threshold then indicating a second error.

12. The method of claim 11, wherein
if the first and the second errors are indicated then determining that the information describing the location of the second base station is incorrect, and further wherein
if the first error is indicated and the second error is not indicated then determining that the information describing the location of the first base station is incorrect, and further wherein
if the first error is not indicated and the second error is indicated then determining that the information describing the location of the third base station is incorrect.

13. The method of claim 12 further comprising the step of estimating corrected information describing the location of the second base station when it is determined to be incorrect.

14. The method of claim 13, the corrected location information is estimated iteratively until the corrected location information of the second base station provides an area of cellular coverage that borders or overlaps the cellular coverage of the first base station and the second base station.

15. The method according to any of claims 11 to 14, wherein the mobile unit and the second mobile unit are the same device.
